# EUROPEAN PATENT SPECIFICATION

(11) **EP 1 925 123 B1**
(45) Date of publication and mention of the grant of the patent: **22.04.2015**
(21) Application number: 05784912.7
(22) Date of filing: 14.09.2005
(51) Int. Cl.: H04L 12/28, H04L 12/24

(54) **CONTROLLED TEMPORARY MOBILE NETWORK**
GESTEUERTES TEMPORÄRES MOBILNETZ
RÉSEAU MOBILE TEMPORAIRE COMMANDÉ

(43) Date of publication of application: 28.05.2008
(73) Proprietor: Telefonaktiebolaget LM Ericsson (publ), 164 83 Stockholm (SE)
(72) Inventor: WALLENTIN, Henrik, SE-16973 Solna (SE); KOBOSKO, Kristoffer, SE-752 34 Uppsala (SE)
(74) Representative: Egrelius, Fredrik
(86) International application number: PCT/SE2005/001334
(87) International publication number: WO 2007/032713

(56) References cited:
- WO-A1-03/077498
- WO-A2-03/103222
- WO-A2-2004/001598
- US-A1- 2002 124 169
- US-A1- 2003 110 291

## Description

### TECHNICAL FIELD OF THE INVENTION

The present invention relates to a mobile node within a Controlled Temporary Mobile Network, which is an improved mobile temporary network divided into mobile groups, the mobile nodes being e.g. portable computer terminals.

### BACKGROUND OF THE INVENTION

The wireless network technology is developing rapidly, accompanied by an increasing use of wireless networks, while the Internet is evolving towards a more wireless environment. A wireless network of mobile nodes, being e.g. portable personal computers or PDA:s (Personal Digital Assistants), is capable of providing communication between the nodes, as well as between each node and other external networks, such as the Internet, e.g. by means of e-mail messages. A LAN (Local Area Network) and a PAN (Personal Area Network) are examples of networking schemes enabling computing devices, such as e.g. personal computers, printers or PDAs, to communicate wirelessly (or by wire) with each other over short distances. E-mail communication may be performed by means of a computer terminal having a wireless (and/or wired) connection to the Internet, as well as by means of a cellular telephone connected to the Internet via a radio access network.

Some wireless networks, e.g. the cellular GSM (Global System for Mobile communication) and UMTS (Universal Mobile Telecommunication System), require an existing infrastructure, while a mobile (temporary) ad-hoc network, such as e.g. a MANET (Mobile Ad-hoc NETwork), according to the MANET working group of the IETF (Internet Engineering Task Force), do not require any fixed infrastructure. The mobile nodes of a MANET are allowed to join and leave the network spontaneously and dynamically, depending on their movement and wish to communicate. The routing protocols for a MANET include e.g. AODV (Ad-hoc On-demand Distance Vector) and DSR (Dynamic Source Routing), and these protocols are adapted to the frequent changes of the network topology in a temporary ad-hoc network. However, both AODV and DSR assumes the existence of only one MANET, and if a new mobile node appear within the range, the new node will automatically become a part of the existing network, thereby forming a larger, extended network. The nodes of a MANET may be divided into groups or clusters, and routing protocols for clusters of a MANET include Cluster Based Routing Protocol (CBRP), Cluster-Head Gateway Switching Routing Protocol (CGSR) and Zone-Based Hierarchical Link State Protocol (ZHLS). Prior art relating to MANETs, that may be divided into clusters, is disclosed in e.g. the patent documents no. WO 03/094026, US 2004/010476, US 2005/0063313 and US 2005/0041627. Prior art relating to fixed networks, configured by an administrator to be static, and which are controlled by a policy engine, are disclosed e.g. in US 2003/0154404 and US 2005/0060537. A policy engine is a set of policy rules comprising executable instructions used by a computing device to control the operation, the policy rules determining how the device responds to the occurrence of specific events.

Further related art within this technical field is described e.g. in WO 03/103222, showing a piconet with master/slaves, e.g. for a building, and in WO 2004/001598, showing a distributed computing network that is purpose-built in for a specific task.

However, the communication within a temporary, spontaneous network such as e.g. a MANET is normally not controlled, and every node within range of the network will be allowed to join. Consequently, a MANET involves several drawbacks, such as e.g. the lack of security due to the fact that the mobile nodes of a MANET normally have access to all the information within the network, and that any mobile node is allowed to join the NANET spontaneously, without any clearance or control. It is not always desirable that two wireless networks merge into one, enlarged network, or that every mobile node that comes into range is included in the network and allowed to share all network resources, without any limitations. A wireless network may not want to reveal its internal topology, including addresses to the internal infrastructure and to the various functionalities of the network, to any mobile node or other wireless network that comes into range. Further, when every mobile node coming into range is allowed to join, as in a MANET, the number of mobile nodes may be large, and the routing may eventually occupy all available bandwidth.

Therefore, the aim of the present invention is to alleviate the problems described above, regarding how to control the mobile nodes joining a temporary mobile network and limit the number of nodes, as well as how to control the communication and routing within the network and the access to network resources and information.

### DESCRIPTION OF THE INVENTION

Thus, it is an object of the present invention to provide an improved temporary mobile network comprising one or more mobile nodes, requiring negotiations before allowing new nodes to join the network and before sharing information and resources available through the network, as well as regarding routing through the network.

These and other objects are achieved in a communication device provided with a Controlled Temporary Mobile Group functionality, and of the method in a communication device provided with a Controlled Temporary Mobile Group functionality, according to the attached claims.

The claims relate to a communication device provided with a Controlled Temporary Mobile Network-functionality, which is configurable by an administrator to enable the device to act as a Mobile Group Node in a temporary Mobile Group within a Controlled Temporary Mobile Network (CTMNET). The temporary Mobile Group comprises one or more Mobile Group Nodes, and one of said Mobile Group Nodes acts as a Mobile Group Leader.

The Controlled Temporary Mobile Network-functionality comprises an adaptable policy engine, which is settable by an administrator, and the Controlled Temporary Mobile Network-functionality is statically configurable by an administrator to enable the device to act as a Mobile Group Leader. A Mobile Group Leader is arranged to control the joining of other Mobile Group Nodes in the temporary Mobile Group according to said adaptable policy engine.

An administrator may be e.g. a user, a system operator, IT-support, a vendor, or an administrator.

A communication device acting as a Mobile Group Leader may further be arranged to control the access to information resources in the temporary Mobile Group according to said adaptable policy engine, and/or to control the routing within a temporary Mobile Group between a source node and a destination node according to said adaptable policy engine. The routing may use the prefix of the IP-address of the destination node.

The Controlled Temporary Mobile Network-functionality may be configurable by an administrator to disable the communication device to act as a Mobile Group Leader.

The Controlled Temporary Mobile Network-functionality may be dynamically configurable by a communication device acting as Mobile Group Leader to enable any device within a temporary Mobile Group to act as a Mobile Group Gateway for communicating with another temporary Mobile Group.

The adaptable policy engine may comprise one or more policy rules that are settable by an administrator, and one or more default policy rules.

The adaptable policy engine of a device acting as a Mobile Group Node may comprise policy rules associated with said Mobile Group Node.

The claims further relate to a method in a communication device provided with a Controlled Temporary Mobile Network-functionality configured by an administrator to enable the device to act as a Mobile Group Leader of a temporary Mobile Group within a Controlled Temporary Mobile Network, said method relating to the joining of a new Mobile Group Node in the temporary Mobile Group, the communication device acting as Mobile Group Leader performing the following steps:
- Receiving a membership requesting message from a Mobile Group Node;
- Consulting its adaptable policy engine;
- Receiving information from its policy engine that membership is allowed;
- Sending a reply to the Mobile Group Node to establish the membership.

The communication device acting as a Mobile Group Leader may control the access to information resources within the temporary Mobile Group by consulting its adaptable policy engine.

The communication device acting as a Mobile Group Leader may further appoint a Mobile Group Gateway within the temporary Mobile Group for communicating with another Mobile Group, by the following steps:
- Receiving a message from another Mobile Group Node in the Mobile Group requesting permission to communicate with another temporary Mobile Group;
- Consulting its policy engine;
- Receiving information from its policy engine that communication is allowed;
- Dynamically configuring the Controlled Temporary Mobile Network functionality of said another Mobile Group Node to act as a Mobile Group Gateway.

A communication device acting as Mobile Group Leader may further perform routing from a source node within the temporary Mobile Group to a destination node in another temporary Mobile Group by the following steps:
- Receiving a routing requesting message from the source node via a Mobile Group Gateway of said temporary Mobile Group;
- Consulting its adaptable policy engine;
- Sending a routing allowing message to the Mobile Group Gateway of said temporary Mobile Group, allowing forwarding of the routing requesting message according to its adaptable policy engine to a Mobile Group Gateway of said another temporary Mobile Group.

A communication device acting as Mobile Group Leader in a transiting temporary Mobile Group may further perform a transit routing from a source node within another, first temporary Mobile Group to a destination node in another second, temporary Mobile Group, by the following steps:
- Receiving a routing requesting message from a Mobile Group Gateway of said first temporary Mobile Group, via a Mobile Group Gateway of said transiting temporary Mobile Group;
- Consulting its adaptable policy engine;
- Sending a routing allowing message to the Mobile Group Gateway of said transiting temporary Mobile Group, allowing forwarding of the routing requesting message according to its adaptable policy engine to a Mobile Group Gateway of said second temporary Mobile Group.

The routing may use the prefix of the IP-address of the destination node.

A communication device according may be reconfigured by an administrator to resign as a Mobile Group Leader.

Other features and further advantages of the invention will be apparent from the following description and figures, as well as from the appended claims.

### BRIEF DESCRIPTION OF THE DRAWINGS

The present invention will now be described in more detail and with reference to the embodiments and to the drawings of figures 1-5, of which:
Figure 1 schematically illustrates a Controlled Temporary Mobile Network comprising four temporary Mobile Groups,
figure 2 is a signalling diagram illustrating the signalling when a Mobile Group Node joins a temporary Mobile Group,
figure 3 illustrates a Controlled Temporary Mobile Network comprising three temporary Mobile Groups,
figure 4 is a signalling diagram illustrating the signalling when a route is set up between two Mobile Group Nodes located in separate temporary Mobile Groups, and
figure 5 is a block diagram illustrating a communication device, provided with a Controlled Temporary Mobile Network-functionality.

### DESCRIPTION OF PREFERRED EMBODIMENTS

The terms and expressions used in the description and in the claims are meant to have the meaning normally used by a person skilled in the art, and the following abbreviations and definitions are used:
CTMNET = Controlled Temporary Mobile Network, comprises one or more temporary Mobile Groups
MG = Mobile Group, comprises one or more Mobile Group Nodes
MGN = Mobile Group Node, a node in an MG.
MGL = Mobile Group Leader, a managing node in an MG.
MGG = Mobile Group Gateway, a node in an MG communicating with an MGG in a different MG.
GGR = Group Gateway Request, a message the MGG sends to the MGL to advertise a newly found MG
IRE = Inter-group Routing Error, a message the MGG sends to the MGL to notify the MGL that the contact with an MG is lost.
IG-RREQ = Inter-group Routing Request, a routing request within an MG.
IG-RREQ-ALLOWED = Inter-group Routing Request Allowed, a message from the MGL to tell the MGG that an MGN is allowed to contact other MG.
IG-RREP = Inter-group Routing Reply, a message sent between MGGs as an answer to the IG-RREQ.

This invention comprises a mobile communication device, such as e.g. a portable personal computer, a PDA or a cellular mobile phone, provided with a new Controlled Temporary Mobile Network (CTMNET)-functionality, configurable to enable the communication device to act as a Mobile Group Node (MGN) in a temporary Mobile Group within a Controlled Temporary Mobile Network, and controlled by an adaptable policy engine. A Mobile Group (MG) according to this invention is a temporary Mobile Group comprising one or more Mobile Group Nodes. One of the Mobile Group Nodes is statically configured by an administrator, by means of a command option or a configuration interface, to manage and control the group by acting as a Mobile Group Leader (MGL) within said Mobile Group. The administrator is hereinafter defined to be any administrator of the communication device, e.g. an administrator, a user, a system operator, IT-support, or a vendor. According to an exemplary embodiment, the configuration of a Mobile Group Node is indirectly performed by the administrator by means of a technical arrangement triggered by a suitable event.

A communication device configured to act as a Mobile Group Leader will act as an MGL statically, i.e. until the administrator re-configures the device to resign as an MGL. During a policy engine configuration, the MGL will store a set of rules for the Mobile Group in its adaptable policy engine, and the rules are settable by the administrator, e.g. to be suitable for a particular environment of a Mobile Group, such as e.g. a confidential business meeting, or a completely or partly open meeting between colleagues or friends. The maximum number of Mobile Group Nodes in a temporary Mobile Group is preferably controlled by the policy engine, and may be settable by the Administrator. The acceptable size of a particular temporary Mobile Group may also depend on the load and capacity of the network. However, a suitable size for a temporary Mobile Group according to this invention is normally less than twenty Mobile Nodes, and a larger number of Mobile Nodes may result in the formation of additional temporary Mobile Groups within the CTMNET.

In order to facilitate the communication between MGNs located in different MGs, one or more MGNs in an MG is preferably configured by the MGL to act as a Mobile Group Gateway, MGG, which is allowed to communicate with MGGs located in another MG. Optionally, the MGL may act as an MGG, according to the policy engine. Thus, a Controlled Temporary Mobile Group functionality according to this invention is capable of enabling a communication device to act as a Mobile Group Node, a Mobile Group Leader and a Mobile Group Gateway.

A temporary Mobile Group (MG) of a Controlled Temporary Mobile Network (CTMNET) according to this invention comprises a limited number of Mobile Group Nodes (MGN), i.e. communication devices being wireless-enabled transceiver devices, running a TCP/IP-based network protocol stack with a new Temporary Mobile Group Routing Protocol (TMGRP), allowing multi-hop communication, while each device may roam spontaneously. A Controlled Temporary Mobile Network (CTMNET) according to this invention differs from prior art mobile and temporary ad-hoc network, e.g. a MANET, by having one statically assigned management node, i.e. the above described Mobile Group Leader MGL, and in that the nodes (MGNs) are not allowed to join a temporary Mobile Group automatically and spontaneously, as in the MANET model, but instead the joining is controlled by the MGL, according to the rules in the adaptable policy engine. The joining of a new Mobile Group Node in a temporary Mobile Group is controlled according to predefined and settable policy rules in a policy engine configured in the MGL, the settable and/or selectable policy rules implementing an adaptable policy engine. A Controlled Temporary Mobile Network according to this invention allows borders to exist between different Mobile Groups, while the Mobile Group Nodes are able to communicate across a border in a controlled fashion.

The adaptable policy engine comprises a set of predefined rules, which are a suitable combination of default rules and rules that are selectable and settable by an administrator for the control and management of a Mobile Group, as well as for the communication within an MG (intra-group communication), between different MGs (inter-group communication), as well as transiting communication, by imposing rules of node connectivity and of the propagation of network topology information within the network.

Thus, a temporary Mobile Group according to this invention consists of one or more Mobile Group Nodes (MGN), one Mobile Group Leader (MGL) and optionally one or more Mobile Group Gateways (MGG). Any MGN has the functionality to act as an MGL or an MGG, if properly configured, and the MGNs, MGLs and MGGs have unique node names. One embodiment of the new Temporary Mobile Group Routing Protocol (TMGRP) used by an MG according to this invention is implemented by an addition of standard AODV extensions to the AODV messages RREQ, RREP, RRER.

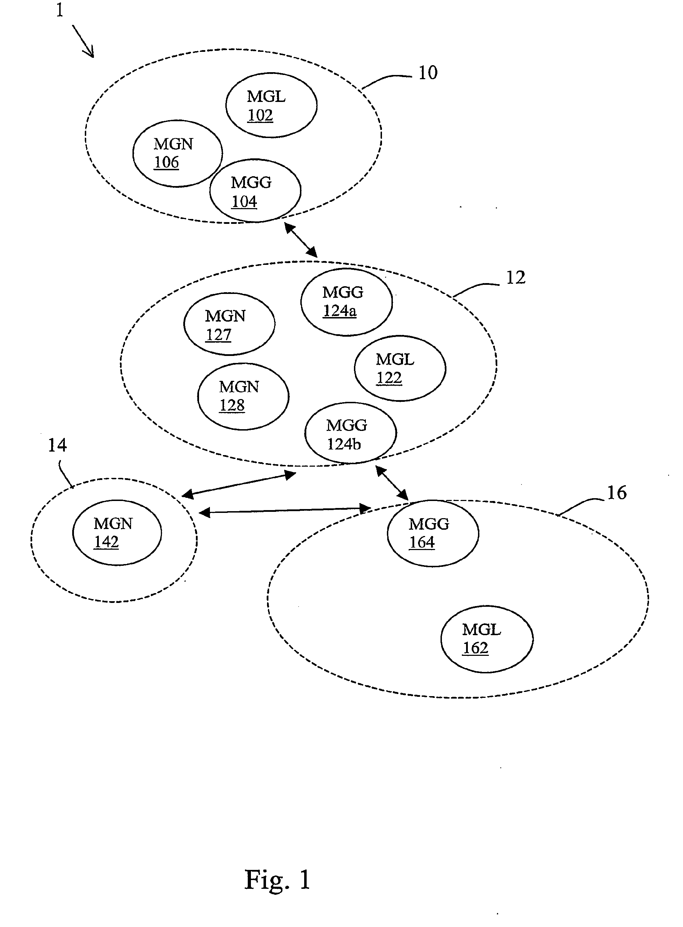

Figure 1 illustrates a Controlled Temporary Mobile Network 1 comprising four Mobile Groups, 10, 12, 14, 16, according to this invention, and Mobile Group Nodes located in separate Mobile Groups communicate with each other via Mobile Group Gateways 104, 124a,b, 142, 164 (MGGs) located on the border between two Mobile Groups. Each Mobile Group Node illustrated in the figure consists of a communication device, such as e.g. a portable personal computer or a PDA, provided with a Controlled Temporary Mobile Network functionality configured to enable the communication device to act as a Mobile Group Node according to this invention. The Controlled Temporary Mobile Network functionality is not indicated in the figure, but is easily implemented by a person skilled in the art, and is not described in detail.

The first Mobile Group, 10, comprises three mobile nodes, of which one is statically configured by an administrator to act as a Mobile Group Leader, MGL, 102, one is dynamically appointed by the MGL to act as Mobile Group Gateway, MGG, 104, and one mobile node constitutes a Mobile Group Node, MGN. 106. The second Mobile Group, 12, comprises five mobile nodes, of which one is statically configured by an administrator to act as a Mobile Group Leader, MGL, 122, two are dynamically appointed by the MGL to act as Mobile Group Gateways, MGGs, 124a,b, and two mobile nodes constitute ordinary Mobile Group Nodes, MGN, 127, 128. The third Mobile Group, 14, comprises only one mobile node, 142, which is statically configured by an administrator to act as a Mobile Group Leader, MGL, and will simultaneously act as a Mobile Group Gateway, MGG. The fourth Mobile Group, 16, comprises two mobile nodes, of which one is statically configured by an administrator to act as a Mobile Group Leader, MGL, 162, while the other is dynamically appointed by the MGL to act as a Mobile Group Gateway, MGG, 164.

A temporary Mobile Group 10, 12, 14, 16, according to this invention is capable of intra-group wireless routing, which is the possibility of finding single-, or multiple hop routes between communication devices within a temporary Mobile Group, and the possibility of advertising services (such as gateways) and controlling, granting and revoking rights to communicating devices regarding the access to the temporary Mobile Group, in accordance with the rules in the policy engine in the Mobile Group Leader 102, 122, 142, 162, of each temporary Mobile Group.

Two temporary Mobile Groups according to this invention are also capable of inter-group wireless routing, which is concerned with finding routes to a destination located in a second Mobile Group, outside a first Mobile Group, and the inter-group wireless routing is handled according to the policy rules stored in the adaptable policy engines in the MGLs of said first and the second Mobile Groups.

A temporary Mobile Group according to this invention is also capable of transit routing, which takes place when neither the source node nor the destination node of a conversation is located in the temporary Mobile Group, but the temporary Mobile Group acts as an intermediate network group. During transit routing, a temporary Mobile Group may want to limit the exposure of its network topology and select the gateways for the transiting, and by providing explicit transiting policies in the policy engine of a Mobile Group Leader of a temporary Mobile Group, it is possible to control the specific route of all transiting traffic.

Each MG 10, 12, 14, 16, in this figure has an MGL 102, 122, 142, 162, managing and controlling every MGN of the MG, and the MGL is serving the MGNs regarding membership requests and request for communication with another MGN. Further, the MGL serves the MGGs 104, 124, 144, regarding membership request, request for communication with another MGN and notification of the discovery of new MG.

An MGL is statically assigned to act as an MGL by an administrator, by e.g. a command option or configuration interface, and the MGL will consult its policy engine for every message the MGL receives. The adaptable policy engine comprises a set of rules describing the policies to apply for a certain request, and according to an exemplary embodiment a policy engine comprises a number of default rules. Further, the rules of the policy engine may be deleted and altered, and new rules may be added by the administrator in order to provide a suitable policy engine for a particular environment of a Mobile Group. Examples of policy rules of the policy engine are whether an MGN is allowed to contact another MGN, whether an MGG should receive traffic from a newly discovered MG, which MGN that is allowed to join a MG, the access to information resources within the MG, and which nodes to use in a transit scenario.

According to a preferred embodiment of this invention, an MGL periodically broadcasts a group advertisement, containing group ID and a flag indicating that it acts as MGL for the temporary Mobile Group, and maintains the temporary Mobile Group by communicating with the MGNs indicated as members in the group. The MGN of an MG periodically broadcasts a node advertisement, containing the unique name of the MGN and the group ID. Further, the MGL manages the communication by supplying routes to the MGNs located in other MGs via one or several MGGs. When an MGN becomes member of an MG, the MGL stores the unique name of the MGN, together with the IP address. Thereby, the MGL will be able to identify the members of the MG, and which policy rules to check when asking for resources within this MG. AN MGN will timeout and be deleted as member of the MG if the MGL does not receive any membership update from the MGN within a predefined time interval.

Optionally, according to one exemplary embodiment of this invention, the MGL provides a dynamic configuration of an MGN becoming a member of the MG by sending an IP address, net mask and broadcast address to the MGN in a reply (e.g. a RREP) to the request for membership (e.g. a RREQ).

According to an exemplary embodiment of this invention, the policy engine of a Mobile Group Node is configurable by means of a public API (Application Programming Interface), and the administrator is able to register selected call-back functions in the API for specific events during the policy engine-configuration of an MGL. The administrator is able to control the policy rules for an MGN connecting to the MG by means of predefined events, and is also able to create new events and select policy rules for the new events, to be stored in the policy engine of the MGL. The policy rules regarding a specific MGN is also stored in the MGN itself.

A public API normally comprises the following functions:
- MG_init_policy_engine - initiates registering of events and callbacks.
- MG_register_event - the event registering function.
- MG_send_membership_request - requesting membership.
- MG_send_welcome - welcoming an MGN into this MG.
- MG_becomes_member - a welcome is received by the MGN becoming a member of the MG
- MG_drop_membership - leaving an MG
- MG_send_message - sending a message to an MGN

Examples of predefined events in a policy engine for a temporary Mobile Group, according one exemplary embodiment of this invention are:
- EVENT_NEW_MG_FOUND - A new MG is found
- EVENT_LOST_MG - The MG, in which this MG is a member, has disappeared
- EVENT_MEMBERSHIP_REQUEST - A membership request message is received
- EVENT_WELCOME_RECEIVED - A welcome message is received
- EVENT_MESSAGE_RECEIVED - A message is received

The policy engine comprises a set of rules indicating the predefined handling of events, and the policy engine is adaptable by settable or selectable policy rules of the policy engine, thereby adapting a specific temporary Mobile Group to a particular environment, e.g. regarding the security. A Mobile Group Leader comprises policy rules for the management of the entire temporary Mobile Group, while the Mobile Group Nodes comprises the policy rules relating to itself. Examples of the predefined handling of events according to one exemplary embodiment of this invention are:
- When an MGN discovers a new MG, and the MGN is not member of any MG, the MGN will request membership in the MG.
- An MGN requesting membership will default be accepted as a member
- When an MGN loses contact with an MG, the MGN will leave the MG.
- When an MGG in a first MG discovers a second MG, the MGG will report this to the MGL of the first MG.
- When an MGL of a first MG receives a report from an MGG indicating a second MG, the MGL will accept to receive data from the second MG.

However, an important advantage with this invention is the adaptable policy engine, capable of adapting a temporary Mobile Group for any particular environment. An administrator may select specific policy rules, according to e.g. the security requirements of a temporary Mobile Group, and the above-described handling of events are only examples of event handling according to this invention.

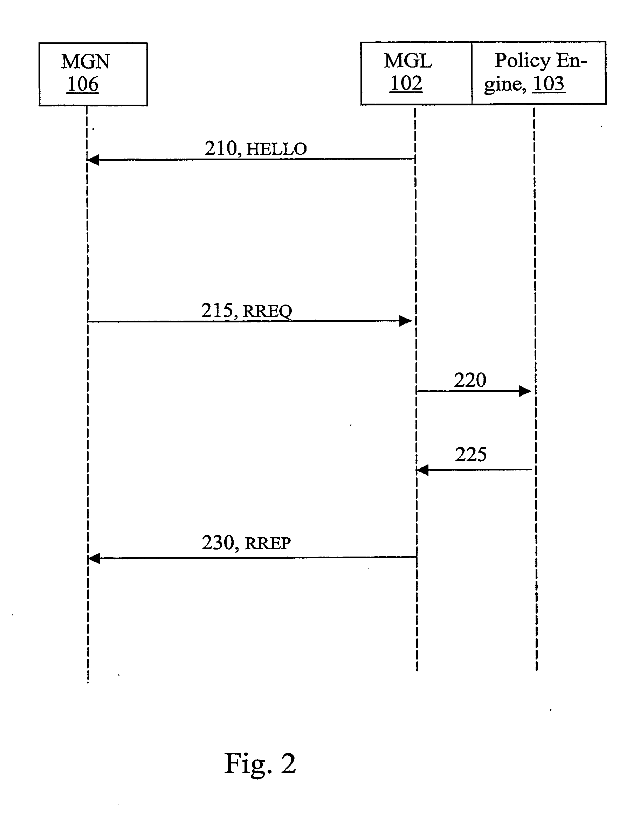

Figure 2 is a signalling diagram illustrating an example of the signalling between a Mobile Group Leader 102 and a Mobile Group Node 106 during a Mobile Group Leader discovery, when the MGN 106 wants to join a temporary Mobile Group managed by the MGL 102. In step 210, the MGN receives a broadcast message containing a group ID, and in step 215, the MGN requests membership to the MG by sending a request (RREQ) to the MGL.

(Actually, the MGN sends the request to the other MGN that the broadcast message was received from, and if this other MGN is not MGL, the request is forwarded to the MGL by the MGN). In step 220, the MGL consults its policy engine 103 regarding the connection of the MGN to the MG. In step 225, the policy engine allows the MGN to join the MG. Finally, in step 230, the MGL sends a reply (RREP) to the MGN, allowing the MGN to join the MG, submitting a new IP address.

According to a preferred embodiment, an MGN periodically sends out a membership update message to its MGL to notify the MGL that the MGN is still member of this MG. Any node receiving and forwarding this membership update message will attach its unique name to this in a piggyback fashion, to reduce data traffic within the MG. The MGL replies to this membership update message and all MGN on the route back to the originating MGN will update its timer for next initiation of a membership update. When an MGN does not receive any reply to a membership update message from its MGL, the MGN will timeout and leave the MG.

An MGN coming into range of another MGN, located in another MG, is capable of applying to its MGL for the right to interface with the other MG. The MGL will consult its policy engine, and the MGN will be appointed MGG by the MGL, if the policy engine in the MGL permits this, and the new MGG will act as a border router for all data and routing packets destined for that MG.

According to an exemplary embodiment, a neighbour group discovery-procedure will be performed when an MGN receives a Mobile Group advertisement message. The MGN will read the message and check whether it originates in the local MG or if it comes from a different MG. If the message originates in a different MG, the MGN will send a Group Gateway Request (GGR) message to the MGL, indicating the ID of the newly found MG. Depending on the rules in the policy engine, the MGL may appoint the MGN to act as either a single MGG to the new MG, one of many MGGs to the new MG, or the MGN will be denied status as MGG. If the inter-group route between two MGGs in different temporary Mobile Groups becomes invalid because of time out, each MGG will issue an Inter-group Routing Error (IRE) message to its MGL, invalidating the gateway, and the MGG loses its gateway status. returning to act as an MGN, unless it still acts as MGG to some other Mobile Group. The MGN will, however, still listen for MG advertisement messages from other temporary Mobile Groups, and may return to being an MGG if it receives an MG advertisement message again.

A conventional MANET uses plain addressing, since any node may join any MANET spontaneously, at any time. However, in a temporary Mobile Group according to this invention, an MGN will periodically receive or forward RREQs for destinations within the MG or outside of the MG, and the MGN must be able to determine whether a routing message or data packet is destined to an MGN in our MG, or to a completely different MG. According to one exemplary embodiment of this invention, this is performed by inspection of the network number, or prefix part, of the destination IP address. The IP address of a node is e.g. reconfigured when an MGN is granted membership in a temporary Mobile Group, followed by a reset of wireless interfaces and a restart of the routing protocol. When a source node originates a routing request, it will first check to see whether the destination node has an IP address with the same prefix as the MG, in which case the destination node is located in the same MG as the source node, and the routing request constitutes a intra-group routing request to a local destination. If, on the other hand, the prefix of the destination node differs from the prefix of the local MG, the routing request constitutes an inter-group routing request to a remote destination. Each MGG will cache this routing request using a long timer, and contact the MGL to negotiate in case this routing request is to be forwarded onto an inter-group link. The MGL, having valid routes to all MGNs and all MGGs, will now send an IG-RREQ-ALLOWED message to all MGG who shall forward this routing request onto their inter-group links. The set of these nodes can be determined using the policy engine of the MGL. In order to propagate the RREQ onto inter-group links, each permitted MGG will transmit an IG-RREQ message to a peer MGG in another group and wait for an IG-RREQ using a long time-out. The peer MGG will check if the incoming routing request is destined for the local MG or not, and if it is destined to the local MG, the MGG will contact the MGL to check if it should propagate this as a standard RREQ into the local MG. If the IG-RREQ is destined for another network, the MGL in question will be able to forward this request to all other MGGs in the local MG, depending on the policy rules in the local MGL. In the inter-group routing reply, the first IG-RREQ that reaches its destination will be chosen as the Inter-group path to reply along. A list of traversed MGG will be carried in the IG-RREQ and all subsequent IG-RREPs can travel backwards along this suboptimal path to the source. Since the path is suboptimal (all traversed MGLs of the MG reside on the path between source and destination), local RREQs updating of the traversal routes with more optimal routes will be initiated.

According to a further embodiment of this invention, the MGL is provided with an IP address lease database, and a table binding a globally unique MGN ID to an IP address, in order to prevent the constant reconfiguration of node interfaces if a node temporarily looses group membership.

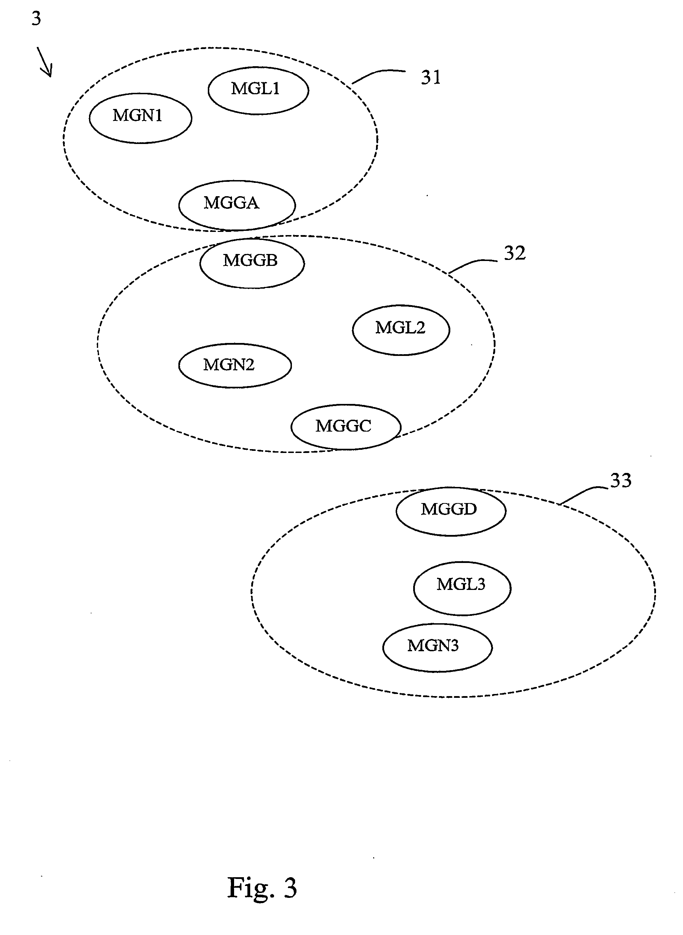

Figure 3 schematically illustrates another Controlled Temporary Mobile Network 3, comprising three temporary Mobile Groups 31, 32, 33, according to this invention. The first temporary Mobile Group, 31, comprises a Mobile Group Node MGN1, a Mobile Group Leader MGL1 and a Mobile Group Gateway MGGA. The second temporary Mobile Group, 32, comprises a Mobile Group Node MGN2, a Mobile Group Leader MGL2 and two Mobile Group Gateways, MGGB and MGGC. The third temporary Mobile Group, 33, comprises a Mobile Group Node MGN3, a Mobile Group Leader MGL3 and a Mobile Group Gateway MGGD.

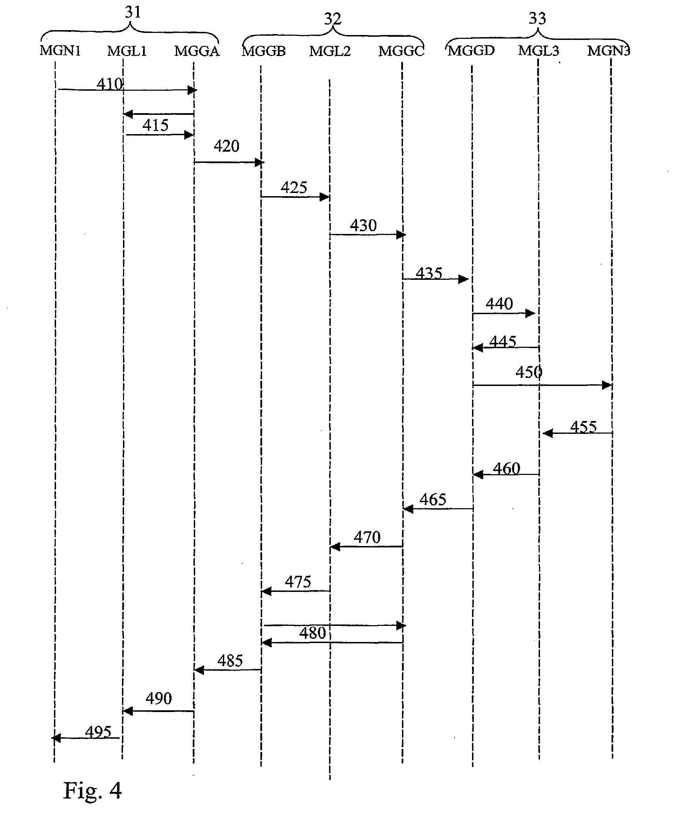

Figure 4 is a signalling diagram illustrating an exemplary embodiment of the signalling during the setting up of a route between a first MGN, i.e. the MGN1 located in the first temporary Mobile Group 31, and a second MGN, i.e. the MGN3, located in the third temporary Mobile Group, 33, as illustrated in figure 3. Figure 4 illustrates a routing request IG-RREQ sent from MGN1 to MGN3, followed by the routing reply IG-RREP sent back from MGN3 to MGN1.

First, the source node MGN1 broadcasts a routing request in step 410, received by MGGA.

In step 415, MGGA contacts MGL1 regarding this routing request, and MGL1 returns an IG-RREQ-ALLOWED to MGGA.

In step 420, MGGA creates and sends an IG-RREQ to the second Mobile Group 32, via MGGB.

In step 425, MGGB determines that the IG-RREQ is not destined for this Mobile Group by looking at the prefix, and forwards the IG-RREQ to MGL2.

In step 430, MGL2 forwards the IG-RREQ to MGGC.

In step 435, MGGC passes the IG-RREQ to the third Mobile Group 33, via MGGD.

In step 440, MGGD realizes that this IG-RREQ is destined for the third Mobile Group, 33, and MGGD contacts MGL3, which consults its policy engine to determine whether this IG-RREQ is allowed in this MG.

In step 445, MGL3 responds that it is allowed.

In step 450, MGGD sends an RREQ to the third temporary Mobile Group 33, that is received by the destination node MGN3.

Thereafter, MGN3 sends an IG-RREP to MGL3, in step 455.

In step 460, MGL3 forwards the IG-RREP to MGGD.

In step 465, MGGD forwards the IG-RREP to MGGC.

In step 470, MGGC forwards the IG-RREP to MGL2

In step 475, MGL2 forwards the IG-RREP to MGGB.

In step 480, MGGB issues an RREQ for MGGC, and receives an optimal route to MGGA, and in step 485, the MGGB forwards the IG-RREP to MGGA.

In step 490, MGGA forwards the IG-RREP to MGL1, which, in turn, forwards the IG-RREP to MGN1 in step 495, thereby completing the set-up of the route between MGN1 and MGN3.

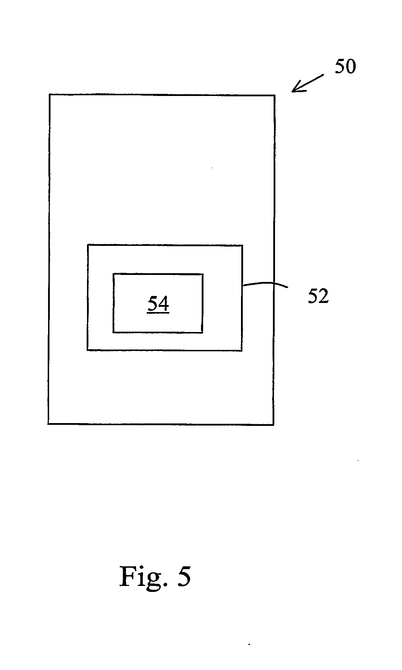

Figure 5 is a block diagram illustrating an embodiment of a communication device 50, provided with a Controlled Temporary Mobile Network functionality 52, which comprises an adaptable policy engine 54, in which an administrator is able to store selected policy rules, e.g. regarding secrecy requirements, in order to adapt the policy engine for the management of a particular temporary, mobile group within a CTMNET.

By means of the solution according to this invention, a partitioned and controlled structure of temporary mobile groups can be created from a large unstructured network of mobile nodes, while still handling the high probability of link breakage and a high level of mobility, which is typical for a wireless network. By means of the invention, any number of mobile nodes may participate by the formation of several temporary mobile groups, the mobile groups capable of interfacing with other mobile groups, and to interact in a controlled manner by means of the adaptable policy engine.

## Claims

1. A communication device (50) provided with a Controlled Temporary Mobile Network-functionality (52), which is configurable by an administrator to enable the device to act as a Mobile Group Node in a temporary Mobile Group (10, 12, 14, 16) within a Controlled Temporary Mobile Network, CTMNET, (1), the temporary Mobile Group comprising one or more Mobile Group Nodes, wherein each Mobile Group Node is provided with a Controlled Temporary Mobile Network-functionality, one of said Mobile Group Nodes acting as a Mobile Group Leader (102, 122, 142, 162), **characterised in that**:
- said Controlled Temporary Mobile Network-functionality (52) comprises an adaptable policy engine (54), which is settable by an administrator;
- said Controlled Temporary Mobile Network-functionality (52) is statically configurable by an administrator to enable and disable the device to act as a Mobile Group Leader (102, 122, 142, 162), which is arranged to control the joining of other Mobile Group Nodes in the temporary Mobile Group (10, 12, 14, 16), and the access to information resources in the temporary Mobile Group, according to said adaptable policy engine (54).

2. A communication device according to claim 1, wherein the communication device (50) acting as Mobile Group Leader (102, 122, 142, 162) is further arranged to control the routing within a temporary Mobile Group (10, 12, 14, 16) between a source node and a destination node according to said adaptable policy engine (54).

3. A communication device according to claim 2, wherein said routing uses the prefix of the IP-address of the destination node.

4. A communication device according to any of the preceding claims, wherein the Controlled Temporary Mobile Network-functionality (52) is dynamically configurable by a communication device acting as Mobile Group Leader (102, 122, 142, 162) to enable a device within a temporary Mobile Group (10, 12, 14, 16) to act as a Mobile Group Gateway (104, 124, 164) for communicating with another temporary Mobile Group.

5. A communication device according to any of the preceding claims, wherein the adaptable policy engine (54) comprises one or more policy rules that are settable by an administrator.

6. A communication device according to any of the preceding claims, wherein the adaptable policy engine (54) comprises one or more default policy rules.

7. A communication device according to any of the preceding claims, wherein the adaptable policy engine (54) of a device acting as a Mobile Group Node comprises policy rules associated with said Mobile Group Node.

8. A method in a communication device (50) provided with a Controlled Temporary Mobile Network-functionality (52) configured by an administrator to enable the device to act as a Mobile Group Leader (102) of a temporary Mobile Group within a Controlled Temporary Mobile Network, CTMNET, (1), the temporary Mobile Group comprising one or more Mobile Group Nodes, wherein each Mobile Group Node is provided with a Controlled Temporary Mobile Network-functionality, the method **characterized in that** a communication device acting as a Mobile Group Leader controls the access to information resources within the temporary Mobile Group (10) by consulting its adaptable policy engine (103), which is comprised in the Controlled Temporary Mobile Network-functionality, and the joining of a Mobile Group Node (106) in the temporary Mobile Group (10) comprising the following steps:
- The communication device acting as a Mobile Group Leader (102) receiving a membership requesting message from a Mobile Group Node (106);
- The communication device acting as Mobile Group Leader (102) consulting its adaptable policy engine (103);
- The communication device acting as Mobile Group Leader (102) receiving information from its policy engine (103) that membership is allowed;
- The communication device acting as Mobile Group Leader (102) sending a reply to the Mobile Group Node (106) and establishing the membership.

9. A method in a communication device according to claim 8 wherein the communication device acting as a Mobile Group Leader (102) appoints a Mobile Group Gateway (104) within the temporary Mobile Group (10) for communicating with another temporary Mobile Group (12, 14, 16), by the following steps:
- The communication device acting as a Mobile Group Leader (102) receiving a message from another Mobile Group Node in the temporary Mobile Group (10) requesting permission to communicate with another temporary Mobile Group (12, 14, 16);
- The communication device acting as Mobile Group Leader (102) consulting its policy engine (103);
- The communication device acting as Mobile Group Leader (102) receiving information from its policy engine (103) that communication is allowed;
- The communication device acting as Mobile Group Leader (102) dynamically configuring the Controlled Temporary Mobile Network functionality of said another Mobile Group Node to act as a Mobile Group Gateway (104).

10. A method in a communication device according to any of the claims 8-9, wherein a routing from a source node within the temporary Mobile Group (10, 31) to a destination node in another temporary Mobile Group (32) comprises the following steps:
- The communication device acting as Mobile Group Leader (102) in the temporary Mobile Group (10, 31) receiving a routing requesting message from the source node via a Mobile Group Gateway (104) of said temporary Mobile Group (10, 31);
- The communication device acting as Mobile Group Leader (102) consulting its adaptable policy engine (103);
- The communication device acting as Mobile Group Leader (102) in the temporary Mobile Group (10, 31) sending a routing allowing message to the Mobile Group Gateway (104) of said temporary Mobile Group (10, 31), allowing forwarding of the routing requesting message according to its adaptable policy engine to a Mobile Group Gateway of said another temporary Mobile Group (32).

11. A method in a communication device according to any of the claims 8-10, wherein a transit routing from a source node within another, first, temporary Mobile Group (31) to a destination node within another, second, temporary Mobile Group (33) comprises the following steps:
- The communication device acting as Mobile Group Leader in a transiting temporary Mobile Group (32) receiving a routing requesting message from a Mobile Group Gateway of said first temporary Mobile Group (31), via a Mobile Group Gateway of said transiting temporary Mobile Group (32);
- The communication device acting as Mobile Group Leader in the transiting temporary Mobile Group (32) consulting its adaptable policy engine;
- The communication device acting as Mobile Group Leader in the transiting temporary Mobile Group (32) sending a routing allowing message to the Mobile Group Gateway of said transiting temporary Mobile Group (32), allowing forwarding of the routing requesting message according to its adaptable policy engine to a Mobile Group Gateway of said second temporary Mobile Group (33).

12. A method in a communication device according to any of the claims 10-11, wherein said routing uses the prefix of the IP-address of the destination node.

13. A method in a communication device according to any of the claims 8-12, wherein the device is reconfigured by an administrator to resign as a Mobile Group Leader.

## Patentansprüche

1. Kommunikationsvorrichtung (50), die mit einer gesteuerten temporären Mobilfunknetz-Funktionalität (52) versehen ist, die durch einen Administrator entsprechend konfiguriert werden kann, um die Vorrichtung für die Funktion als Mobilgruppenknoten in einer temporären Mobilgruppe (10, 12, 14, 16) innerhalb eines gesteuerten temporären Mobilfunknetzes, CTMNET, (1) zu aktivieren, wobei die temporäre Mobilgruppe einen oder mehrere Mobilgruppenknoten umfasst, wobei jeder Mobilgruppenknoten mit einer gesteuerten temporären Mobilfunknetz-Funktionalität versehen ist, wobei einer der Mobilgruppenknoten als Mobilgruppenführer (102, 122, 142, 162) fungiert, **dadurch gekennzeichnet, dass**:
- die gesteuerte temporäre Mobilfunknetz-Funktionalität (52) eine anpassungsfähige Policy Engine (54) umfasst, die durch einen Administrator eingestellt werden kann;
- die gesteuerte temporäre Mobilfunknetz-Funktionalität (52) durch einen Administrator entsprechend statisch konfiguriert werden kann, um die Vorrichtung für die Funktion als Mobilgruppenführer (102, 122, 142, 162) zu aktivieren und zu deaktivieren, der dafür eingerichtet ist, die Einbeziehung anderer Mobilgruppenknoten in der temporären Mobilgruppe (10, 12, 14, 16) und den Zugriff auf Informationsressourcen in der temporären Mobilgruppe gemäß der anpassungsfähigen Policy Engine (54) zu steuern.

2. Kommunikationsvorrichtung nach Anspruch 1, wobei die Kommunikationsvorrichtung (50), die als Mobilgruppenführer (102, 122, 142, 162) fungiert, ferner dafür eingerichtet ist, das Routing innerhalb einer temporären Mobilgruppe (10, 12, 14, 16) zwischen einem Quellenknoten und einem Zielknoten gemäß der anpassungsfähigen Policy Engine (54) zu steuern.

3. Kommunikationsvorrichtung nach Anspruch 2, wobei das Routing das Präfix der IP-Adresse des Zielknotens verwendet.

4. Kommunikationsvorrichtung nach einem der vorhergehenden Ansprüche, wobei die gesteuerte temporäre Mobilfunknetz-Funktionalität (52) durch eine Kommunikationsvorrichtung, die als Mobilgruppenführer (102, 122, 142, 162) fungiert, dynamisch konfiguriert werden kann, um eine Vorrichtung innerhalb einer temporären Mobilgruppe (10, 12, 14, 16) für die Funktion als Mobilgruppen-Gateway (104, 124, 164) zum Kommunizieren mit anderen temporären Mobilgruppe zu aktivieren.

5. Kommunikationsvorrichtung nach einem der vorhergehenden Ansprüche, wobei die anpassungsfähige Policy Engine (54) eine oder mehrere Richtlinienregeln umfasst, die durch einen Administrator eingestellt werden können.

6. Kommunikationsvorrichtung nach einem der vorhergehenden Ansprüche, wobei die anpassungsfähige Policy Engine (54) eine oder mehrere vorgegebene Richtlinienregeln umfasst.

7. Kommunikationsvorrichtung nach einem der vorangehenden Ansprüche, wobei die anpassungsfähige Policy Engine (54) einer als Mobilgruppenknoten fungierenden Vorrichtung Richtlinienregeln umfasst, die dem Mobilgruppenknoten zugeordnet sind.

8. Verfahren in einer Kommunikationsvorrichtung (50), die mit einer gesteuerten temporären Mobilfunknetz-Funktionalität (52) versehen ist, die durch einen Administrator entsprechend konfiguriert wird, um die Vorrichtung für die Funktion als Mobilgruppenführer (102) einer temporären Mobilgruppe innerhalb eines gesteuerten temporären Mobilfunknetzes, CTMNET, (1) zu aktivieren, wobei die temporäre Mobilgruppe einen oder mehrere Mobilgruppenknoten umfasst, wobei jeder Mobilgruppenknoten mit einer gesteuerten temporären Mobilfunknetz-Funktionalität versehen ist, wobei das Verfahren **dadurch gekennzeichnet ist, dass** eine Kommunikationsvorrichtung, die als Mobilgruppenführer fungiert, Folgendes steuert: den Zugriff auf Informationsressourcen innerhalb der temporären Mobilgruppe (10), indem sie ihre anpassungsfähige Policy Engine (103) konsultiert, die in der gesteuerten temporären Mobilfunknetz-Funktionalität enthalten ist, und die Einbeziehung eines Mobilgruppenknotens (106) in die temporäre Mobilgruppe (10), umfassend die folgenden Schritte:
- Empfangen einer Mitgliedschaftsanfragenachricht von einem Mobilgruppenknoten (106) durch die als Mobilgruppenführer (102) fungierende Kommunikationsvorrichtung;
- Konsultieren ihrer anpassungsfähigen Policy Engine (103) durch die als Mobilgruppenführer (102) fungierende Kommunikationsvorrichtung;
- Empfangen von Information, dass die Mitgliedschaft erlaubt ist, von ihrer Policy Engine (103) durch die als Mobilgruppenführer (102) fungierende Kommunikationsvorrichtung;
- Senden einer Antwort an den Mobilgruppenknoten (106) und Einrichten der Mitgliedschaft durch die als Mobilgruppenführer (102) fungierende Kommunikationsvorrichtung.

9. Verfahren in einer Kommunikationsvorrichtung nach Anspruch 8, wobei die als Mobilgruppenführer (102) fungierende Kommunikationsvorrichtung ein Mobilgruppen-Gateway (104) innerhalb der temporären Mobilgruppe (10) zum Kommunizieren mit einer anderen temporären Mobilgruppe (12, 14, 16) mit den folgenden Schritten festlegt:
- Empfangen einer Nachricht von einem anderen Mobilgruppenknoten in der temporären Mobilgruppe (10) durch die als Mobilgruppenführer (102) fungierende Kommunikationsvorrichtung mit der Anfrage um Erlaubnis, mit einer anderen temporären Mobilgruppe (12, 14, 16) zu kommunizieren;
- Konsultieren ihrer Policy Engine (103) durch die als Mobilgruppenführer (102) fungierende Kommunikationsvorrichtung;
- Empfangen von Information, dass die Kommunikation erlaubt ist, von ihrer Policy Engine (103) durch die als Mobilgruppenführer (102) fungierende Kommunikationsvorrichtung;
- dynamisches Konfigurieren der gesteuerten temporären Mobilfunknetz-Funktionalität des anderen Mobilgruppenknotens für die Funktion als Mobilgruppen-Gateway (104) durch die als Mobilgruppenführer (102) fungierende Kommunikationsvorrichtung.

10. Verfahren in einer Kommunikationsvorrichtung nach einem der Ansprüche 8 bis 9, wobei ein Routing von einem Quellenknoten innerhalb der temporären Mobilgruppe (10, 31) zu einem Zielknoten in einer anderen temporären Mobilgruppe (32) folgende Schritte umfasst:
- Empfangen einer Routinganfragenachricht vom Quellenknoten über ein Mobilgruppen-Gateway (104) der temporären Mobilgruppe (10, 31) durch die als Mobilgruppenführer (102) fungierende Kommunikationsvorrichtung in der temporären Mobilgruppe (10, 31);
- Konsultieren ihrer anpassungsfähigen Policy Engine (103) durch die als Mobilgruppenführer (102) fungierende Kommunikationsvorrichtung;
- Senden einer Routingerlaubnisnachricht an das Mobilgruppen-Gateway (104) der temporären Mobilgruppe (10, 31) durch die als Mobilgruppenführer (102) fungierende Kommunikationsvorrichtung in der temporären Mobilgruppe (10, 31) mit der Erlaubnis zum Weiterleiten der Routinganfragenachricht gemäß ihrer anpassungsfähigen Policy-Engine an ein Mobilgruppen-Gateway der anderen temporären Mobilgruppe (32).

11. Verfahren in einer Kommunikationsvorrichtung nach einem der Ansprüche 8 bis 10, wobei ein Transitrouting von einem Quellenknoten innerhalb einer anderen, ersten, temporären Mobilgruppe (31) an einen Zielknoten innerhalb einer anderen, zweiten, temporären Mobilgruppe (33) die folgenden Schritte umfasst:
- Empfangen einer Routinganfragenachricht von einem Mobilgruppen-Gateway der ersten temporären Mobilgruppe (31) über ein Mobilgruppen-Gateway einer zu durchlaufenden temporären Mobilgruppe (32) durch die als Mobilgruppenführer fungierende Kommunikationsvorrichtung in der zu durchlaufenden temporären Mobilgruppe (32);
- Konsultieren ihrer anpassungsfähigen Policy Engine durch die als Mobilgruppenführer fungierende Kommunikationsvorrichtung in der zu durchlaufenden temporären Mobilgruppe (32);
- Senden einer Routingerlaubnisachricht an das Mobilgruppen-Gateway der zu durchlaufenden temporären Mobilgruppe (32) durch die als Mobilgruppenführer fungierende Kommunikationsvorrichtung in der zu durchlaufenden temporären Mobilgruppe (32) mit der Erlaubnis zum Weiterleiten der Routinganfragenachricht gemäß ihrer anpassungsfähigen Policy-Engine an ein Mobilgruppen-Gateway der zweiten temporären Mobilgruppe (33).

12. Verfahren in einer Kommunikationsvorrichtung nach einem der Ansprüche 10 bis 11, wobei das Routing das Präfix der IP-Adresse des Zielknotens verwendet.

13. Verfahren in einer Kommunikationsvorrichtung nach einem der Ansprüche 8 bis 12, wobei die Vorrichtung durch einen Administrator so umkonfiguriert wird, dass sie als Mobilgruppenführer ausscheidet.

## Revendications

1. Dispositif de communication (50) pourvu d'une fonctionnalité de réseau mobile temporaire commandé (52), qui peut être configuré par un administrateur pour permettre au dispositif d'agir en tant que noeud de groupe mobile dans un groupe mobile temporaire (10, 12, 14, 16) dans un réseau mobile temporaire commandé, CTMNET, (1), le groupe mobile temporaire comprenant un ou plusieurs noeuds de groupe mobile, dans lequel chaque noeud de groupe mobile est pourvu d'une fonctionnalité de réseau mobile temporaire commandé, l'un desdits noeuds de groupe mobile agissant en tant que chef de groupe mobile (102, 122, 142, 162), **caractérisé en ce que** :
- ladite fonctionnalité de réseau mobile temporaire commandé (52) comprend un moteur de politique adaptable (54), qui peut être configuré par un administrateur ;
- ladite fonctionnalité de réseau mobile temporaire commandé (52) peut être configurée statiquement par un administrateur pour permettre et interdire au dispositif d'agir en tant que chef de groupe mobile (102, 122, 142, 162), qui est agencée pour contrôler le rattachement d'autres noeuds de groupe mobile au groupe mobile temporaire (10, 12, 14, 16), et l'accès aux ressources d'informations dans le groupe mobile temporaire, conformément au dit moteur de politique adaptable (54).

2. Dispositif de communication selon la revendication 1, dans lequel le dispositif de communication (50) agissant en tant que chef de groupe mobile (102, 122, 142, 162) est en outre agencé pour contrôler l'acheminement dans un groupe mobile temporaire (10, 12, 14, 16) entre un noeud de source et un noeud de destination conformément au dit moteur de politique adaptable (54).

3. Dispositif de communication selon la revendication 2, dans lequel ledit acheminement utilise le préfixe de l'adresse IP du noeud de destination.

4. Dispositif de communication selon l'une quelconque des revendications précédentes, dans lequel la fonctionnalité de réseau mobile temporaire commandé (52) peut être configurée dynamiquement par un dispositif de communication agissant en tant que chef de groupe mobile (102, 122, 142, 162) pour permettre à un dispositif dans un groupe mobile temporaire (10, 12, 14, 16) d'agir en tant que passerelle de groupe mobile (104, 124, 164) pour communiquer avec un autre groupe mobile temporaire.

5. Dispositif de communication selon l'une quelconque des revendications précédentes, dans lequel le moteur de politique adaptable (54) comprend une ou plusieurs règles de politique qui peuvent être configurées par un administrateur.

6. Dispositif de communication selon l'une quelconque des revendications précédentes, dans lequel le moteur de politique adaptable (54) comprend une ou plusieurs règles de politique par défaut.

7. Dispositif de communication selon l'une quelconque des revendications précédentes, dans lequel le moteur de politique adaptable (54) d'un dispositif agissant en tant que noeud de groupe mobile comprend des règles de politique associées au dit noeud de groupe mobile.

8. Procédé dans un dispositif de communication (50) pourvu d'une fonctionnalité de réseau mobile temporaire commandé (52) configurée par un administrateur pour permettre au dispositif d'agir en tant que chef de groupe mobile (102) d'un groupe mobile temporaire dans un réseau mobile temporaire commandé, CTMNET, (1), le groupe mobile temporaire comprenant un ou plusieurs noeuds de groupe mobile, dans lequel chaque noeud de groupe mobile est pourvu d'une fonctionnalité de réseau mobile temporaire commandé, le procédé étant **caractérisé en ce qu'**un dispositif de communication agissant en tant que chef de groupe mobile contrôle l'accès aux ressources d'informations dans le groupe mobile temporaire (10) en consultant son moteur de politique adaptable (103), qui est compris dans la fonctionnalité de réseau mobile temporaire commandé, et le rattachement d'un noeud de groupe mobile (106) au groupe mobile temporaire (10), comprenant les étapes suivantes :
- le dispositif de communication agissant en tant que chef de groupe mobile (102) recevant un message de demande d'appartenance d'un noeud de groupe mobile (106);
- le dispositif de communication agissant en tant que chef de groupe mobile (102) consultant son moteur de politique adaptable (103) ;
- le dispositif de communication agissant en tant que chef de groupe mobile (102) recevant des informations de son moteur de politique (103) indiquant qu'une appartenance est autorisée ;
- le dispositif de communication agissant en tant que chef de groupe mobile (102) envoyant une réponse au noeud de groupe mobile (106) et établissant l'appartenance.

9. Procédé dans un dispositif de communication selon la revendication 8, dans lequel le dispositif de communication agissant en tant que chef de groupe mobile (102) nomme une passerelle de groupe mobile (104) dans le groupe mobile temporaire (10) pour communiquer avec un autre groupe mobile temporaire (12, 14, 16), par les étapes suivantes :
- le dispositif de communication agissant en tant que chef de groupe mobile (102) recevant un message d'un autre noeud de groupe mobile dans le groupe mobile temporaire (10) demandant la permission de communiquer avec un autre groupe mobile temporaire (12, 14, 16) ;
- le dispositif de communication agissant en tant que chef de groupe mobile (102) consultant son moteur de politique (103) ;
- le dispositif de communication agissant en tant que chef de groupe mobile (102) recevant des informations de son moteur de politique (103) indiquant que la communication est autorisée ;
- le dispositif de communication agissant en tant que chef de groupe mobile (102) configurant dynamiquement la fonctionnalité de réseau mobile temporaire commandé dudit un autre noeud de groupe mobile pour agir en tant que passerelle de groupe mobile (104).

10. Procédé dans un dispositif de communication selon l'une quelconque des revendications 8 et 9, dans lequel un acheminement d'un noeud de source dans le groupe mobile temporaire (10, 31) vers un noeud de destination dans un autre groupe mobile temporaire (32) comprend les étapes suivantes :
- le dispositif de communication agissant en tant que chef de groupe mobile (102) dans le groupe mobile temporaire (10, 31) recevant un message de demande d'acheminement du noeud de source par l'intermédiaire d'une passerelle de groupe mobile (104) dudit groupe mobile temporaire (10, 31) ;
- le dispositif de communication agissant en tant que chef de groupe mobile (102) consultant son moteur de politique adaptable (103) ;
- le dispositif de communication agissant en tant que chef de groupe mobile (102) dans le groupe mobile temporaire (10, 31) envoyant un message d'autorisation d'acheminement à la passerelle de groupe mobile (104) dudit groupe mobile temporaire (10, 31), autorisant l'acheminement du message de demande d'acheminement conformément à son moteur de politique adaptable vers une passerelle de groupe mobile dudit un autre groupe mobile temporaire (32).

11. Procédé dans un dispositif de communication selon l'une quelconque des revendications 8 à 10, dans lequel un acheminement de transit d'un noeud de source dans un autre premier groupe mobile temporaire (31) vers un noeud de destination dans un autre deuxième groupe mobile temporaire (33) comprend les étapes suivantes :
- le dispositif de communication agissant en tant que chef de groupe mobile dans un groupe mobile temporaire de transit (32) recevant un message de demande d'acheminement d'une passerelle de groupe mobile dudit premier groupe mobile temporaire (31), par l'intermédiaire d'une passerelle de groupe mobile dudit groupe mobile temporaire de transit (32) ;
- le dispositif de communication agissant en tant que chef de groupe mobile dans le groupe mobile temporaire de transit (32) consultant son moteur de politique adaptable ;
- le dispositif de communication agissant en tant que chef de groupe mobile dans le groupe mobile temporaire de transit (32) envoyant un message d'autorisation d'acheminement à la passerelle de groupe mobile dudit groupe mobile temporaire de transit (32), autorisant l'acheminement du message de demande d'acheminement conformément à son moteur de politique adaptable vers une passerelle de groupe mobile dudit deuxième groupe mobile temporaire (33).

12. Procédé dans un dispositif de communication selon l'une quelconque des revendications 10 et 11, dans lequel ledit acheminement utilise le préfixe de l'adresse IP du noeud de destination.

13. Procédé dans un dispositif de communication selon l'une quelconque des revendications 8 à 12, dans lequel le dispositif est reconfiguré par un administrateur pour démissionner de sa fonction de chef de groupe mobile.
